# EUROPEAN PATENT APPLICATION

(11) **EP 4 825 607 A1**
(43) Date of publication of application: **21.10.2026**
(21) Application number: 24903182.4
(22) Date of filing: 13.06.2024
(51) Int. Cl.: B60C 7/00, B60C 19/00

(54) **NON-PNEUMATIC TIRE**

(30) Priority: 13.12.2023 JP 2023210545; 13.12.2023 JP 2023210553
(71) Applicant: BRIDGESTONE CORPORATION, Chuo-ku Tokyo 104-8340 (JP)
(72) Inventor: KAMADA, Takehito, Tokyo 104-8340 (JP); SUKEGAWA, Shin, Tokyo 104-8340 (JP); ITO, Yujiro, Tokyo 104-8340 (JP); HOSHINO, Hironori, Tokyo 104-8340 (JP)
(74) Representative: Marks & Clerk LLP
(86) International application number: PCT/JP2024/021558
(87) International publication number: WO 2025/126518

(57) **Abstract**

A non-pneumatic tire includes a wheel member attachable to an axle, a ring member mounted on the wheel member, and a communication device embedded in the ring member. The ring member includes an inner cylinder fixed to the wheel member, an outer cylinder surrounding the inner cylinder on a tire radial direction outer side, and a connecting member that connects the inner cylinder and the outer cylinder and is elastically deformable between the inner cylinder and the outer cylinder. The communication device is embedded in the inner cylinder or the outer cylinder.

## Description

### TECHNICAL FIELD

The present disclosure relates to a non-pneumatic tire.

### BACKGROUND

Patent Literature (PTL) 1 describes a non-pneumatic tire. The non-pneumatic tire disclosed in PTL 1 includes: an attachment body attachable to an axle; a ring member having an inner cylinder and an outer cylinder, the inner cylinder being externally mounted on the attachment body and the outer cylinder surrounding the inner cylinder from the tire radial direction outer side; and a connecting member, which is disposed in plural along the tire circumferential direction between the inner cylinder and the outer cylinder, and connects the two cylinders.

### CITATION LIST

### Patent Literature

PTL 1: JP 2018-193046 A

### SUMMARY

### (Technical Problem)

The inventors of the present disclosure have newly conceived of providing a communication device (for example, an RF tag or the like) in a non-pneumatic tire as described in PTL 1, and have newly discovered a configuration capable of suppressing damage to the communication device in the non-pneumatic tire during running of a vehicle equipped with the non-pneumatic tire (hereinafter, simply referred to as "during vehicle running"), thereby arriving at the present disclosure.

An object of the present disclosure is to provide a non-pneumatic tire capable of suppressing damage to a communication device during vehicle running.

### (Solution to Problem)

A non-pneumatic tire according to a first aspect of the present disclosure comprises:
(1)
   a wheel member attachable to an axle;
   a ring member mounted on the wheel member; and
   a communication device embedded in the ring member,
   wherein the ring member comprises:
      an inner cylinder fixed to the wheel member;
      an outer cylinder surrounding the inner cylinder on a tire radial direction outer side; and
      a connecting member that connects the inner cylinder and the outer cylinder and is elastically deformable between the inner cylinder and the outer cylinder,
   wherein the communication device is embedded in the inner cylinder or the outer cylinder of the non-pneumatic tire.

In one embodiment of the present disclosure, the non-pneumatic tire is as follows:
(2)
the communication device has an elongated shape,
and the communication device is embedded in the inner cylinder such that its longitudinal direction extends along a tire width direction, in the non-pneumatic tire according to (1) above.

In one embodiment of the present disclosure, the non-pneumatic tire is as follows:
(3)
the communication device is embedded in the inner cylinder such that at least a part thereof is not included in a connecting region of the inner cylinder where the connecting member is connected, in the non-pneumatic tire according to (1) or (2) above.

In one embodiment of the present disclosure, the non-pneumatic tire is as follows:
(4)
the communication device is embedded in the inner cylinder such that the entirety thereof is not included in the connecting region, in the non-pneumatic tire according to (3) above.

In one embodiment of the present disclosure, the non-pneumatic tire is as follows:
(5)
the communication device has an elongated shape,
and the communication device is embedded in the outer cylinder such that its longitudinal direction extends along a tire width direction, in the non-pneumatic tire according to (1) above.

In one embodiment of the present disclosure, the non-pneumatic tire is as follows:
(6)
the communication device is embedded in the outer cylinder, and
a spiral reinforcement layer formed by spirally winding, on an outer circumferential surface of the outer cylinder of the ring member, a filament body in which one cord or a plurality of parallel cords are embedded in a covering body, and
a tread member surrounding the spiral reinforcement layer on a tire radial direction outer side, are provided,
in the non-pneumatic tire according to (1) or (5) above.

In one embodiment of the present disclosure, the non-pneumatic tire is as follows:
(7)
the communication device is embedded in the outer cylinder such that at least a part thereof is included in a connecting region of the outer cylinder where the connecting member is connected, in the non-pneumatic tire according to any one of (1), (5), and (6) above.

In one embodiment of the present disclosure, the non-pneumatic tire is as follows:
(8)
the communication device is embedded in the outer cylinder such that the entirety thereof is included in the connecting region, in the non-pneumatic tire according to (7) above.

In one embodiment of the present disclosure, the non-pneumatic tire is as follows:
(9)
the communication device is an RF tag, in the non-pneumatic tire according to any one of (1) to (8) above.

### (Advantageous Effect)

According to the present disclosure, it is possible to provide a non-pneumatic tire capable of suppressing damage to a communication device during vehicle running.

### BRIEF DESCRIPTION OF THE DRAWINGS

In the accompanying drawings:
FIG. 1 is a side view of a non-pneumatic tire according to one embodiment of the present disclosure;
FIG. 2 is a diagram illustrating an enlarged portion of FIG. 1;
FIG. 3 is a cross-sectional view taken along line I-I in FIG. 2;
FIG. 4 is a cross-sectional view taken along line II-II in FIG. 1;
FIG. 5 is a diagram depicting the communication device illustrated in FIG. 1 and a reader/writer capable of wireless communication with the communication device;
FIG. 6 is a diagram illustrating an example of the communication device illustrated in FIG. 1;
FIG. 7 is a perspective view illustrating a state in which the communication device illustrated in FIG. 6 is covered with a covering member;
FIG. 8 is a diagram illustrating a modification of the arrangement of the communication device illustrated in FIG. 1;
FIG. 9 is a side view of a non-pneumatic tire according to one embodiment of the present disclosure;
FIG. 10 is a diagram illustrating an enlarged portion of FIG. 9;
FIG. 11 is a cross-sectional view taken along line III-III in FIG. 10;
FIG. 12 is a diagram depicting the communication device illustrated in FIG. 9 and a reader/writer capable of wireless communication with the communication device;
FIG. 13 is a diagram illustrating an example of the communication device illustrated in FIG. 9;
FIG. 14 is a perspective view illustrating a state in which the communication device illustrated in FIG. 13 is covered with a covering member; and
FIG. 15 is a diagram illustrating a modification of the arrangement of the communication device illustrated in FIG. 9.

Hereinafter, embodiments of the non-pneumatic tire according to the present disclosure will be illustratively described with reference to the drawings. In each figure, identical components are denoted by the same reference numerals. Hereinafter, the direction parallel to the tire central axis O of the non-pneumatic tire will be referred to as the "tire width direction A." Hereinafter, the direction around the tire central axis O of the non-pneumatic tire will be referred to as the "tire circumferential direction B." Hereinafter, in a cross-section perpendicular to the tire central axis O, the radial direction of a virtual circle centered on the tire central axis O will be referred to as the "tire radial direction C."

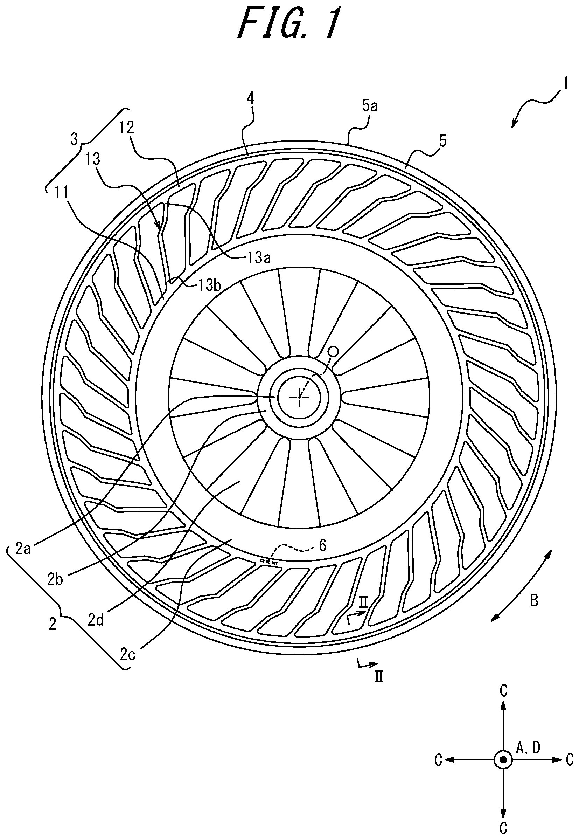

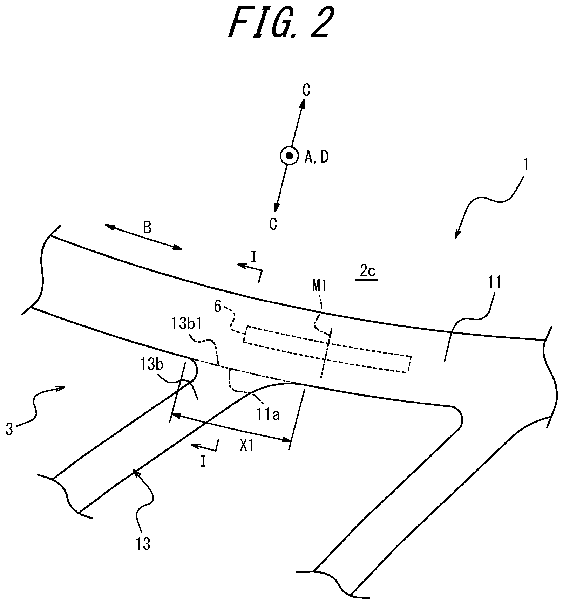

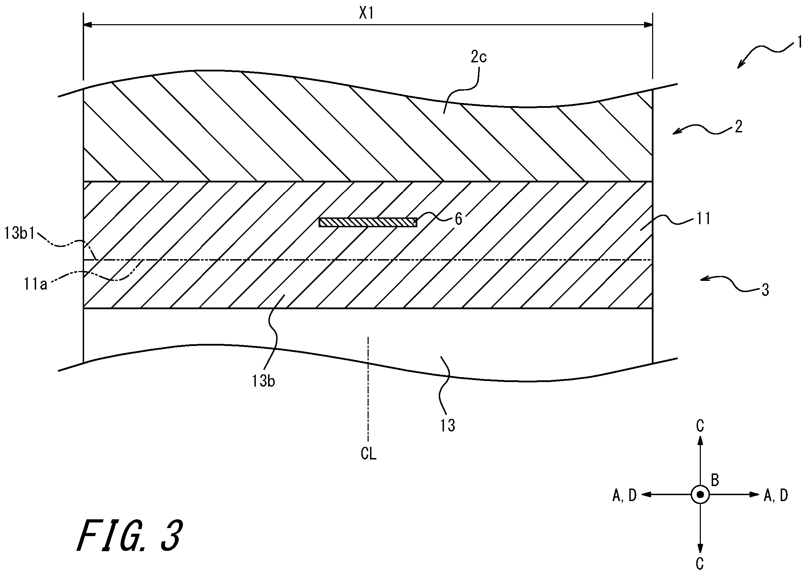

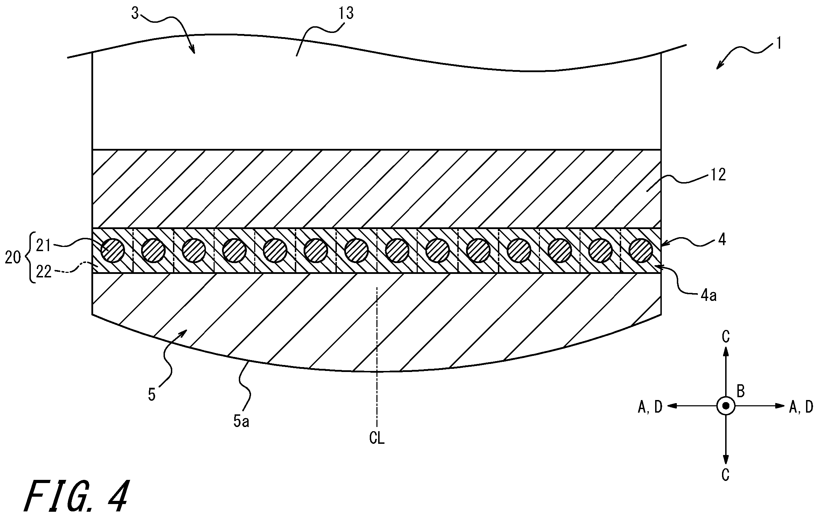

FIG. 1 is a side view of a non-pneumatic tire 1 as one embodiment of the non-pneumatic tire according to the present disclosure. FIG. 2 is an enlarged view of a portion of FIG. 1. FIG. 3 is a cross-sectional view taken along line I-I in FIG. 2. FIG. 4 is a cross-sectional view taken along line II-II in FIG. 1.

As illustrated in FIG. 1, the non-pneumatic tire 1 of the present embodiment includes a wheel member 2, a ring member 3, a spiral reinforcement layer 4, a tread member 5, and a communication device 6. The non-pneumatic tire 1 is used, for example, by being mounted on the axle of various vehicles such as bicycles, motorcycles, automobiles, and the like.

As illustrated in FIG. 1, the wheel member 2 is formed in a disk shape. Each of the ring member 3, the spiral reinforcement layer 4, and the tread member 5 is formed in an annular shape. The central axis of the wheel member 2, the central axis of the ring member 3, the central axis of the spiral reinforcement layer 4, and the central axis of the tread member 5 are positioned on a common axis. In the present embodiment, this common axis is the tire central axis O.

In the present embodiment, the central positions in the tire width direction A of the wheel member 2, the ring member 3, the spiral reinforcement layer 4, and the tread member 5 substantially coincide. The wheel member 2, the ring member 3, the spiral reinforcement layer 4, and the tread member 5 of the present embodiment, as a whole, have a structure that is symmetrical in the tire width direction A with respect to the tire equatorial plane CL (see FIGS. 3 and 4) passing through the central position in the tire width direction A, but the configuration is not limited to this configuration.

The wheel member 2 is configured to be attachable to an axle. Specifically, the wheel member 2 of the present embodiment includes a cylindrical boss 2a extending in the tire width direction A and into which the axle is fitted, a holding cylindrical portion 2b fixed to the outer circumferential surface of the boss 2a, a supporting cylindrical portion 2c that surrounds the outer side in the tire radial direction C of the holding cylindrical portion 2b and supports the ring member 3 on its outer circumferential surface, and a plurality of spokes 2d that connect the holding cylindrical portion 2b and the supporting cylindrical portion 2c.

The boss 2a, the holding cylindrical portion 2b, and the supporting cylindrical portion 2c are each arranged such that their central axes are positioned on the tire central axis O. The plurality of spokes 2d are arranged, for example, at equal intervals in the tire circumferential direction B. Each of the plurality of spokes 2d extends radially in the tire radial direction C from the boss 2a.

The boss 2a, the holding cylindrical portion 2b, the supporting cylindrical portion 2c, and the plurality of spokes 2d may be made of metal such as an aluminum alloy, for example. Alternatively, the boss 2a, the holding cylindrical portion 2b, the supporting cylindrical portion 2c, and the plurality of spokes 2d may be made of resin such as a thermoplastic resin. Furthermore, some of the elements among the boss 2a, the holding cylindrical portion 2b, the supporting cylindrical portion 2c, and the plurality of spokes 2d may be made of metal, and the other elements may be made of resin. Thus, the material of the components of the wheel member 2 is not particularly limited.

The ring member 3 is mounted on the wheel member 2. More specifically, the ring member 3 of the present embodiment is externally fitted onto the supporting cylindrical portion 2c of the wheel member 2 and is supported on the outer circumferential surface of the supporting cylindrical portion 2c.

The ring member 3 includes an inner cylinder 11, an outer cylinder 12, and a connecting member 13.

The inner cylinder 11 is fixed to the wheel member 2. Specifically, the inner cylinder 11 of the present embodiment is externally fitted onto the supporting cylindrical portion 2c of the wheel member 2 and is supported by the outer circumferential surface of the supporting cylindrical portion 2c over the entire tire circumferential direction B. In this state, the inner cylinder 11 of the present embodiment is fixed to the supporting cylindrical portion 2c by being joined thereto with fastening members such as bolts. The inner cylinder 11 is attached to the axle via the wheel member 2.

The outer cylinder 12 surrounds the outer side in the tire radial direction C of the inner cylinder 11. The central axis of the inner cylinder 11 and the central axis of the outer cylinder 12 are positioned on the tire central axis O. The inner cylinder 11 and the outer cylinder 12 of the present embodiment are arranged such that their respective central portions in the tire width direction A coincide with each other.

The connecting member 13 connects the inner cylinder 11 and the outer cylinder 12. The connecting member 13 is configured to be elastically deformable between the inner cylinder 11 and the outer cylinder 12. More specifically, the connecting member 13 is configured to be elastically deformable in the tire radial direction C between the inner cylinder 11 and the outer cylinder 12.

As illustrated in FIG. 1, the connecting member 13 of the present embodiment is arranged in a plurality in the tire circumferential direction B. More specifically, the connecting member 13 of the present embodiment is arranged in a plurality in the tire circumferential direction B at positions between the inner cylinder 11 and the outer cylinder 12 in the tire radial direction C. These plurality of connecting members 13 are arranged spaced apart in the tire circumferential direction B. That is, two adjacent connecting members 13 in the tire circumferential direction B are arranged spaced apart from each other and are not in contact with each other. Furthermore, the plurality of connecting members 13 of the present embodiment are arranged so as to be point-symmetrical with respect to the tire central axis O.

In addition, the connecting member 13 of the present embodiment is a plate-shaped portion arranged such that its thickness direction is in the in-plane direction of a plane perpendicular to the tire central axis O. Further, in the connecting member 13 of the present embodiment, the outer end portion 13a on the outer side in the tire radial direction C, which is connected to the outer cylinder 12, and the inner end portion 13b on the inner side in the tire radial direction C, which is connected to the inner cylinder 11, are arranged at different positions in the tire circumferential direction B. By doing so, the plate-shaped portion as the connecting member 13 can be used as a leaf spring that is easily elastically deformable in the tire radial direction C. However, the configuration of the connecting member 13 is not limited to that of the present embodiment.

The materials of the inner cylinder 11, the outer cylinder 12, and the connecting member 13 are not particularly limited. In the present embodiment, the inner cylinder 11, the outer cylinder 12, and the connecting member 13 are made of resin. From the viewpoint of weight reduction, it is preferable that the inner cylinder 11, the outer cylinder 12, and the connecting member 13 are made of resin. As the resin material for the inner cylinder 11, the outer cylinder 12, and the connecting member 13, for example, thermoplastic resins such as polyester and nylon, thermosetting resins such as vinyl ester resin and unsaturated polyester resin, and other synthetic resins can be used. The resin material may further include, as reinforcement fibers, fibers such as glass, carbon, graphite, aramid, polyethylene, and ceramic. Note that the outer cylinder 12 and the connecting member 13, in which the communication device 6 is not embedded, may be made of metal, but as described above, from the viewpoint of weight reduction, it is also preferable that the outer cylinder 12 and the connecting member 13 are made of resin.

In the present embodiment, the inner cylinder 11, the outer cylinder 12, and the connecting member 13 are integrally formed of a resin material by injection molding. As the injection molding method, it is possible to integrally mold the entirety of the inner cylinder 11, the outer cylinder 12, and the connecting member 13 simultaneously. As the resin material, for example, a single type of resin material, a mixture containing two or more types of resin materials, or a mixture containing one or more types of resin materials and one or more types of elastomers may be used. Furthermore, for example, additives such as antioxidants, plasticizers, fillers, or pigments may be included. The resin material is preferably a thermoplastic resin. Note that the inner cylinder 11, the outer cylinder 12, and the connecting member 13 may be formed separately and assembled together.

Note that the wheel member 2 has a function of connecting the axle and the ring member 3, and the ring member 3 has a function of absorbing vibrations transmitted from the ground to the axle. Thus, since the wheel member 2 and the ring member 3 have different functions, they may be formed of different materials. For example, the ring member 3 may be formed of a material having a relatively small elastic modulus to ensure vibration absorption performance, and the wheel member 2 may be formed of a material having an elastic modulus greater than that of the ring member 3 to ensure robustness.

The ring member 3 of the present embodiment is constituted by the above-described inner cylinder 11, outer cylinder 12, and connecting member 13, but is not limited to this configuration. The ring member 3 may further include other parts in addition to the inner cylinder 11, the outer cylinder 12, and the connecting member 13.

The spiral reinforcement layer 4 is formed by spirally winding, on the outer circumferential surface of the outer cylinder 12 of the ring member 3, a filament body 20 in which one cord 21 or a plurality of parallel cords 21 are embedded in a covering body 22. In FIG. 4, as an example, a filament body 20 in which only one cord 21 is embedded in the covering body 22 is depicted.

By spirally winding the filament body 20 on the outer circumferential surface of the outer cylinder 12, which serves as the outer circumferential surface of the ring member 3, the filament body 20 is adjacent in the tire width direction A on the outer circumferential surface of the outer cylinder 12. The portions of the covering body 22 of the filament body 20 that are adjacent in the tire width direction A are integrally bonded in the tire width direction A, thereby forming the spiral reinforcement layer 4 on the outer circumferential surface of the outer cylinder 12. The two-dot chain line in FIG. 4 indicates, for convenience of explanation, the boundary between the portions of the covering body 22 before they are bonded. In other words, the spiral reinforcement layer 4 includes a base layer 4a formed by bonding together the portions of the covering body 22 that are adjacent in the tire width direction A, and one or more cords 21 extending spirally within the base layer 4a. The covering body 22 may be made of, for example, a resin material. The covering body 22 may also be formed of a rubber composition, for example. As the cord 21, for example, a steel cord or the like can be used.

The spiral reinforcement layer 4 may be bonded to the outer circumferential surface of the outer cylinder 12 of the ring member 3 over the entire tire circumferential direction B. The bonding between the spiral reinforcement layer 4 and the outer cylinder 12 may be performed, for example, by welding the filament body 20 forming the spiral reinforcement layer 4 to the outer circumferential surface of the outer cylinder 12. When the covering body 22 is formed of a rubber composition, the bonding between the spiral reinforcement layer 4 and the outer cylinder 12 may be performed by vulcanization bonding.

In the non-pneumatic tire 1 of the present embodiment, since the spiral reinforcement layer 4 is provided, the rigidity of the outer cylinder 12 of the ring member 3 can be increased. As a result, for example, even when the non-pneumatic tire 1 is used in environments where it receives a large input of force from the road surface or where a projection on the road surface pierces the tread member 5 of the non-pneumatic tire 1, the durability of the non-pneumatic tire 1 can be improved.

The tread member 5 surrounds the outer side in the tire radial direction C of the spiral reinforcement layer 4. More specifically, the tread member 5 is formed in a cylindrical shape and covers the entire outer circumferential surface on the outer side in the tire radial direction C of the outer cylinder 12 of the ring member 3 from the outer side in the tire radial direction C of the spiral reinforcement layer 4. The elastic modulus of the material constituting the tread member 5 is smaller than the elastic modulus of the material constituting the ring member 3. The outer circumferential surface on the outer side in the tire radial direction C of the tread member 5 is the tread surface 5a of the non-pneumatic tire 1. As illustrated in FIG. 4, the tread surface 5a of the tread member 5 may be a curved surface that is convex toward the outer side in the tire radial direction C at the central side in the tire width direction A compared to the both end sides.

The tread member 5 is formed, for example, of a vulcanized rubber in which a rubber composition containing natural rubber or the like is vulcanized, a thermoplastic material or the like. Examples of the thermoplastic material include thermoplastic elastomers and thermoplastic resins. Examples of the thermoplastic elastomers include amide-based thermoplastic elastomer (TPA), ester-based thermoplastic elastomer (TPC), olefin-based thermoplastic elastomer (TPO), styrene-based thermoplastic elastomer (TPS), urethane-based thermoplastic elastomer (TPU), thermoplastic rubber vulcanizate (TPV), and other thermoplastic elastomers (TPZ) as defined in JIS K 6418. Examples of the thermoplastic resins include urethane resin, olefin resin, vinyl chloride resin, polyamide resin, and the like. From the viewpoint of wear resistance, it is preferable to form the tread member 5 of vulcanized rubber.

As illustrated in FIGS. 1 to 3, the communication device 6 is embedded in the ring member 3. More specifically, the communication device 6 is embedded in the inner cylinder 11 of the ring member 3. By doing so, the periphery of the communication device 6 is protected by the inner cylinder 11, and it is possible to suppress damage to the communication device 6 during vehicle running.

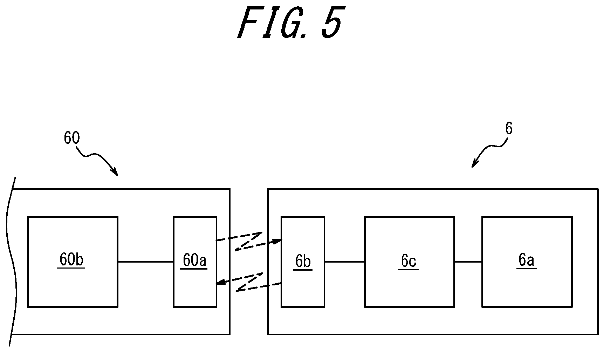

FIG. 5 is a diagram depicting an RF tag as the communication device 6 of the present embodiment and a reader/writer 60 capable of wireless communication with this RF tag. As illustrated in FIG. 5, the communication device 6 of the present embodiment may be a passive RF tag including a storage unit 6a that stores information regarding the non-pneumatic tire 1, an antenna unit 6b capable of transmitting and receiving information with a reader/writer 60 located outside the non-pneumatic tire 1, and a controller 6c capable of writing information to and reading information from the storage unit 6a. Specifically, the RF tag as the communication device 6 of the present embodiment can receive, via the antenna unit 6b, information transmitted from the antenna unit 60a of the reader/writer 60 by means of radio waves or magnetic fields. By rectification (in the case of radio waves) or resonance (in the case of magnetic fields), power is generated in the antenna unit 6b, and the storage unit 6a and the controller 6c perform predetermined operations. For example, the controller 6c reads out information from the storage unit 6a and replies (transmits) it to the reader/writer 60 via the antenna unit 6b by means of radio waves or magnetic fields. The antenna unit 60a of the reader/writer 60 receives radio waves or magnetic fields from the RF tag as the communication device 6 of the present embodiment. The controller 60b of the reader/writer 60 can obtain the information stored in the storage unit 6a by extracting the received information. The above-described storage unit 6a and controller 6c can be constituted, for example, by an integrated circuit (IC chip) including a non-volatile memory.

The information stored in the storage unit 6a of the RF tag as the communication device 6 of the present embodiment is not particularly limited. The storage unit 6a may, for example, store unique identification information of the non-pneumatic tire 1, such as the manufacturer, manufacturing plant, manufacturing date, and the like of the non-pneumatic tire 1, which can identify each non-pneumatic tire individually. The storage unit 6a may also store, as information rewritable by the reader/writer 60, tire history information such as the running distance of the non-pneumatic tire 1, the number of sudden braking events, the number of roaring starts, the number of sharp cornering situations, and the like. Furthermore, for example, a sensor for detecting tire acceleration or the like may be attached to the non-pneumatic tire 1, and the storage unit 6a may store detection information detected by the sensor. The RF tag as the communication device 6 can acquire detection information from the sensor by wirelessly communicating with the sensor via the antenna unit 6b.

Note that the communication device 6 only needs to be configured to be capable of wireless communication with a predetermined device outside the non-pneumatic tire 1, and is not limited to the RF tag of the present embodiment.

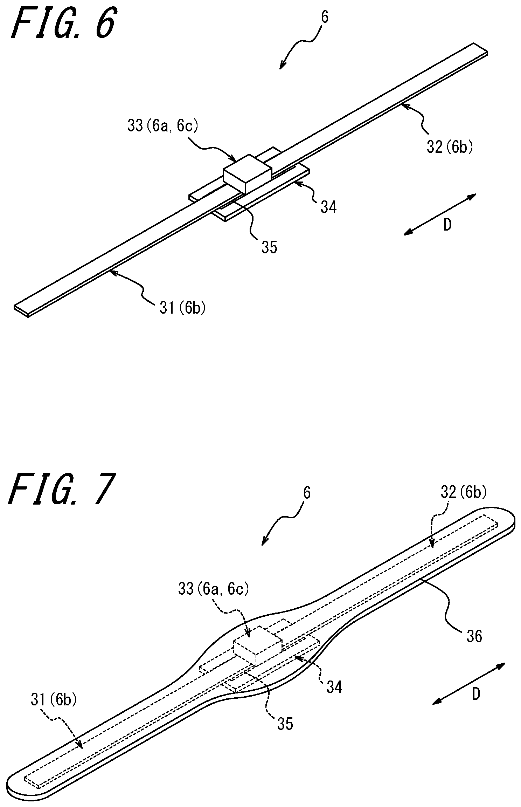

FIGS. 6 and 7 are perspective views depicting the RF tag as the communication device 6 of the present embodiment. As illustrated in FIG. 6, the RF tag as the communication device 6 of the present embodiment includes: a first antenna 31 and a second antenna 32 constituting the antenna unit 6b; an IC chip 33 constituting the controller 6c and the storage unit 6a, which operates by the electromotive force induced by radio waves received by the first antenna 31 and the second antenna 32; a plate-shaped supporting member 34 to which the IC chip 33 is attached; and a conductive connecting member 35 that electrically connects the IC chip 33 to each of the first antenna 31 and the second antenna 32. As illustrated in FIG. 6, the RF tag as the communication device 6 of the present embodiment includes the first antenna 31 and the second antenna 32, which are elongated and protrude in opposite directions from the IC chip 33 with the IC chip 33 interposed therebetween. In this way, the communication device 6 of the present embodiment has an elongated shape in which the longitudinal direction D of the first antenna 31 and the second antenna 32 is the longitudinal direction of the entire communication device 6. FIG. 7 is a perspective view depicting a state in which the RF tag as the communication device 6 illustrated in FIG. 6 is covered by a covering member 36. The covering member 36 is formed of resin. In the present embodiment, as illustrated in FIG. 7, the RF tag as the communication device 6, whose periphery is covered by the covering member 36, is embedded in the inner cylinder 11.

Hereinafter, with reference to FIGS. 2 and 3, details regarding the position and orientation in which the communication device 6 of the present embodiment is embedded in the inner cylinder 11 will be described.

As described above, the RF tag as the communication device 6 of the present embodiment has an elongated shape. As illustrated in FIGS. 2 and 3, the communication device 6 of the present embodiment is embedded in the inner cylinder 11 such that its longitudinal direction (in the present embodiment, the same direction as the longitudinal direction D of the first antenna 31 and the second antenna 32, hereinafter referred to as the longitudinal direction D) extends along the tire width direction A. The outer cylinder 12 of the non-pneumatic tire 1 is deformed in the tire radial direction C by forces received from the road surface during vehicle running. At this time, the variation in the amount of deformation in the tire radial direction C depending on the position in the tire circumferential direction B is greater than the variation in the amount of deformation in the tire radial direction C depending on the position in the tire width direction A. The inner cylinder 11 is supported on the outer circumferential surface of the supporting cylindrical portion 2c of the wheel member 2, and therefore, compared to the outer cylinder 12, it is less likely to deform in the tire radial direction C. However, the variation in the amount of deformation in the tire radial direction C of the outer cylinder 12 can also affect the inner cylinder 11, which is connected to the outer cylinder 12 via the connecting member 13. Specifically, due to the variation in the amount of deformation in the tire radial direction C of the outer cylinder 12, some variation may also occur in the amount of strain in the tire radial direction C of the inner cylinder 11. Therefore, the communication device 6 with an elongated shape is embedded in the inner cylinder 11 such that its longitudinal direction D extends along the tire width direction A. By doing so, compared to a configuration in which the longitudinal direction D of the elongated communication device 6 is arranged along the tire circumferential direction B, it is possible to suppress the concentration of stress on a part of the longitudinal direction D of the communication device 6 within the inner cylinder 11, and the resulting local deformation, damage, or breakage, based on the variation in the amount of strain in the inner cylinder 11 caused by the variation in the amount of deformation in the tire radial direction C of the outer cylinder 12. In other words, compared to an arrangement in which the longitudinal direction D of the communication device 6 extends along the tire circumferential direction B, the durability of the communication device 6 can be improved.

Note that "extending along the tire width direction A" as used herein is not limited to being parallel to the tire width direction A, but also includes the cases where the device is inclined at an angle of less than 45 degrees with respect to the tire width direction A. However, as in the present embodiment, it is preferable that the communication device 6 is arranged such that its longitudinal direction D is parallel to, or substantially parallel to, the tire width direction A, that is, inclined at an angle of 5 degrees or less with respect to the tire width direction A.

Further, as illustrated in FIGS. 2 and 3, the communication device 6 of the present embodiment is embedded in the inner cylinder 11 such that at least a part thereof is not included in a connecting region X1 of the inner cylinder 11 of the ring member 3 where the connecting member 13 is connected. Here, the "connecting region X1" refers to, when the inner cylinder 11 and the connecting member 13 in the connected state are divided into two by the virtual outer circumferential surface 11a of the inner cylinder 11 as a boundary, the region of the inner cylinder 11 that is covered in the tire radial direction C by the virtual end surface 13b1 of the inner end portion 13b of the connecting member 13.

In the inner cylinder 11, the connecting region X1 is more likely to be directly pressed by the inner end portion 13b of the elastically deformable connecting member 13 and to undergo strain in the tire radial direction C, compared to regions other than the connecting region X1. Therefore, by arranging at least a part of the communication device 6 in a region of the inner cylinder 11 other than the connecting region X1, it is possible to suppress deformation and damage of the communication device 6 due to strain in the tire radial direction C of the inner cylinder 11, compared to a configuration in which the entire communication device is arranged in the connecting region X1.

In addition, in the inner cylinder 11, the connecting region X1 is less heat-dissipative than regions other than the connecting region X1, because it is continuous with the inner end portion 13b of the elastically deformable connecting member 13. Therefore, by arranging at least a part of the communication device 6 in a region of the inner cylinder 11 other than the connecting region X1, it is possible to suppress failure of the communication device 6 due to heat, compared to a configuration in which the entire communication device is arranged in the connecting region X1.

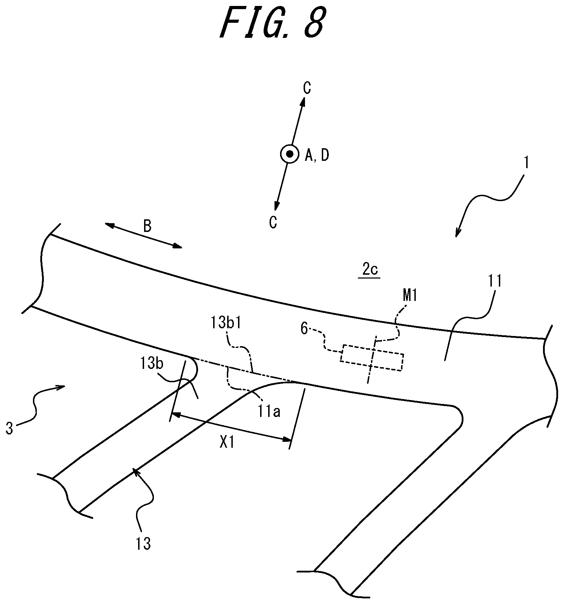

As illustrated in FIG. 2, from the perspective of suppressing deformation and damage of the communication device 6, as well as suppressing failure of the communication device 6 due to heat, it is preferable that the communication device 6 is embedded in the inner cylinder 11 such that at least the center position M1 in the tire circumferential direction B of the communication device 6 is not included in the connecting region X1. Furthermore, from the perspective of suppressing deformation and damage of the communication device 6, as well as suppressing failure of the communication device 6 due to heat, as illustrated in FIG. 8, it is more preferable that the communication device 6 is embedded in the inner cylinder 11 such that the entire communication device 6 is not included in the connecting region X1, that is, such that the entirety is included in a region other than the connecting region X1. Such an arrangement is more easily realized, as illustrated in FIG. 8, when the connecting member 13 is a plate-shaped portion used as a leaf spring and the communication device 6 has an elongated shape with a longitudinal direction D, by arranging the longitudinal direction D of the communication device 6 along the tire width direction A.

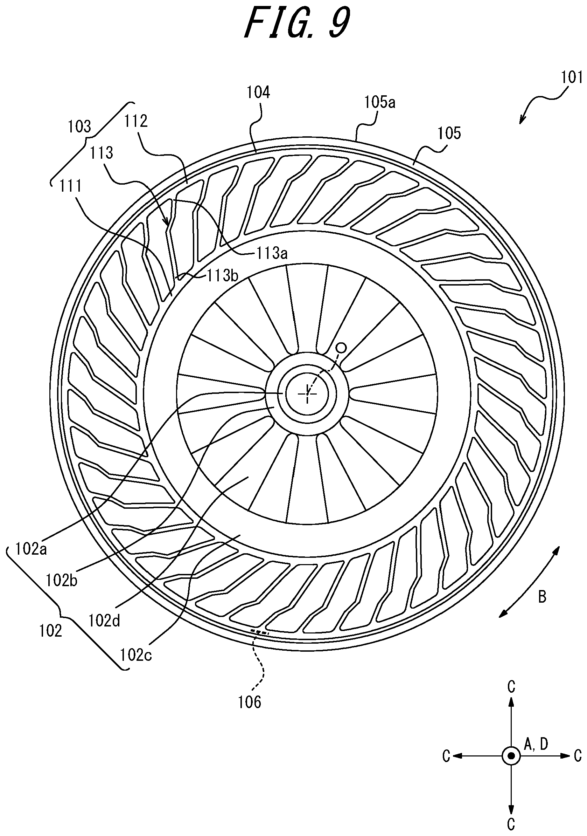

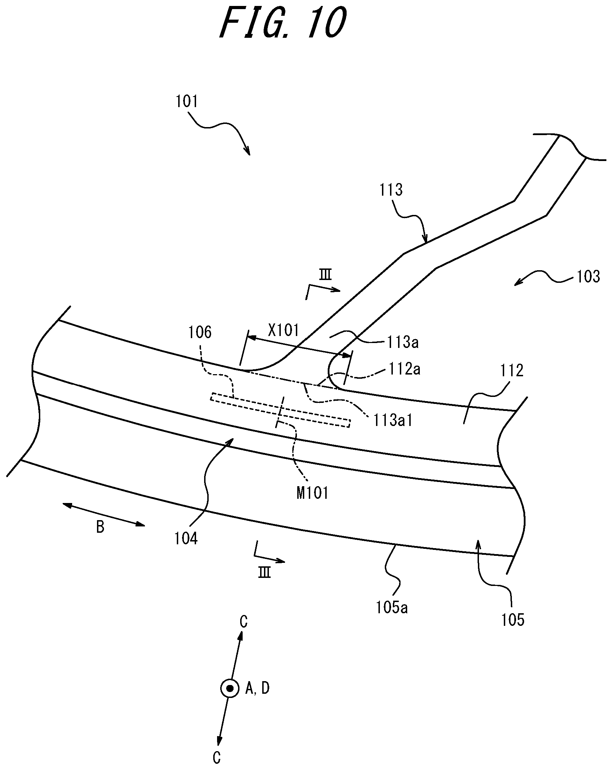

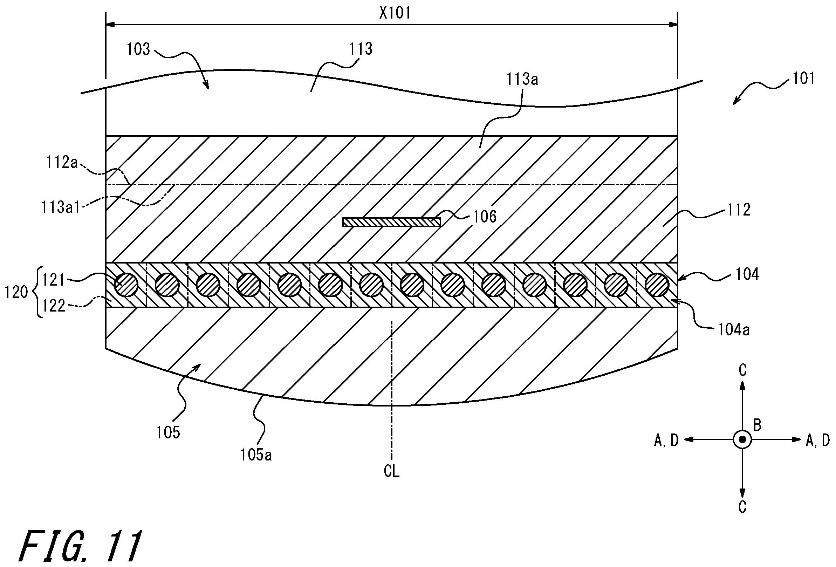

FIG. 9 is a side view of a non-pneumatic tire 101 as one embodiment of a non-pneumatic tire according to the present disclosure. FIG. 10 is an enlarged view of a part of FIG. 9. FIG. 11 is a cross-sectional view taken along line III-III in FIG. 10.

As illustrated in FIG. 9, the non-pneumatic tire 101 of the present embodiment includes a wheel member 102, a ring member 103, a spiral reinforcement layer 104, a tread member 105, and a communication device 106. The non-pneumatic tire 101 is used, for example, by being mounted on the axle of various vehicles such as bicycles, motorcycles, automobiles, and the like.

As illustrated in FIG. 9, the wheel member 102 is formed in a disk shape. Each of the ring member 103, the spiral reinforcement layer 104, and the tread member 105 is formed in an annular shape. The central axis of the wheel member 102, the central axis of the ring member 103, the central axis of the spiral reinforcement layer 104, and the central axis of the tread member 105 are positioned on a common axis. In the present embodiment, this common axis is the tire central axis O.

In the present embodiment, the central positions in the tire width direction A of the wheel member 102, the ring member 103, the spiral reinforcement layer 104, and the tread member 105 substantially coincide. The wheel member 102, the ring member 103, the spiral reinforcement layer 104, and the tread member 105 of the present embodiment, as a whole, have a structure that is symmetrical in the tire width direction A with respect to the tire equatorial plane CL (see FIG. 11) passing through the central position in the tire width direction A, but the configuration is not limited to this configuration.

The wheel member 102 is configured to be attachable to an axle. Specifically, the wheel member 102 of the present embodiment includes a cylindrical boss 102a extending in the tire width direction A and into which the axle is fitted, a holding cylindrical portion 102b fixed to the outer circumferential surface of the boss 102a, a supporting cylindrical portion 102c that surrounds the outer side in the tire radial direction C of the holding cylindrical portion 102b and supports the ring member 103 on its outer circumferential surface, and a plurality of spokes 102d that connect the holding cylindrical portion 102b and the supporting cylindrical portion 102c.

The boss 102a, the holding cylindrical portion 102b, and the supporting cylindrical portion 102c are each arranged such that their central axes are positioned on the tire central axis O. The plurality of spokes 102d are arranged, for example, at equal intervals in the tire circumferential direction B. Each of the plurality of spokes 102d extends radially in the tire radial direction C from the boss 102a.

The boss 102a, the holding cylindrical portion 102b, the supporting cylindrical portion 102c, and the plurality of spokes 102d may be made of metal, such as an aluminum alloy, for example. Alternatively, the boss 102a, the holding cylindrical portion 102b, the supporting cylindrical portion 102c, and the plurality of spokes 102d may be made of resin, such as a thermoplastic resin. Furthermore, some of the elements among the boss 102a, the holding cylindrical portion 102b, the supporting cylindrical portion 102c, and the plurality of spokes 102d may be made of metal, and the other elements may be made of resin. Thus, the material of the components of the wheel member 102 is not particularly limited.

The ring member 103 is mounted on the wheel member 102. More specifically, the ring member 103 of the present embodiment is externally fitted onto the supporting cylindrical portion 102c of the wheel member 102 and is supported on the outer circumferential surface of the supporting cylindrical portion 102c.

The ring member 103 includes an inner cylinder 111, an outer cylinder 112, and a connecting member 113.

The inner cylinder 111 is fixed to the wheel member 102. Specifically, the inner cylinder 111 of the present embodiment is externally fitted onto the supporting cylindrical portion 102c of the wheel member 102 and is supported by the outer circumferential surface of the supporting cylindrical portion 102c over the entire tire circumferential direction B. In this state, the inner cylinder 111 of the present embodiment is fixed to the supporting cylindrical portion 102c by being joined thereto with fastening members such as bolts. The inner cylinder 111 is attached to the axle via the wheel member 102.

The outer cylinder 112 surrounds the outer side in the tire radial direction C of the inner cylinder 111. The central axis of the inner cylinder 111 and the central axis of the outer cylinder 112 are positioned on the tire central axis O. The inner cylinder 111 and the outer cylinder 112 of the present embodiment are arranged such that their respective central portions in the tire width direction A coincide with each other.

The connecting member 113 connects the inner cylinder 111 and the outer cylinder 112. The connecting member 113 is configured to be elastically deformable between the inner cylinder 111 and the outer cylinder 112. More specifically, the connecting member 113 is configured to be elastically deformable in the tire radial direction C between the inner cylinder 111 and the outer cylinder 112.

As illustrated in FIG. 9, the connecting member 113 of the present embodiment is arranged in a plurality in the tire circumferential direction B. More specifically, the connecting member 113 of the present embodiment is arranged in a plurality in the tire circumferential direction B at positions between the inner cylinder 111 and the outer cylinder 112 in the tire radial direction C. These plurality of connecting members 113 are arranged spaced apart in the tire circumferential direction B. That is, two adjacent connecting members 113 in the tire circumferential direction B are arranged spaced apart from each other and are not in contact with each other. Furthermore, the plurality of connecting members 113 of the present embodiment are arranged so as to be point-symmetrical with respect to the tire central axis O.

In addition, the connecting member 113 of the present embodiment is a plate-shaped portion arranged such that its thickness direction is in the in-plane direction of a plane perpendicular to the tire central axis O. Further, in the connecting member 113 of the present embodiment, the outer end portion 113a on the outer side in the tire radial direction C, which is connected to the outer cylinder 112, and the inner end portion 113b on the inner side in the tire radial direction C, which is connected to the inner cylinder 111, are arranged at different positions in the tire circumferential direction B. By doing so, the plate-shaped portion as the connecting member 113 can be used as a leaf spring that is easily elastically deformable in the tire radial direction C. However, the configuration of the connecting member 113 is not limited to that of the present embodiment.

The materials of the inner cylinder 111, the outer cylinder 112, and the connecting member 113 are not particularly limited. In the present embodiment, the inner cylinder 111, the outer cylinder 112, and the connecting member 113 are made of resin. From the viewpoint of weight reduction, it is preferable that the inner cylinder 111, the outer cylinder 112, and the connecting member 113 are made of resin. As the resin material for the inner cylinder 111, the outer cylinder 112, and the connecting member 113, for example, thermoplastic resins such as polyester and nylon, thermosetting resins such as vinyl ester resin and unsaturated polyester resin, and other synthetic resins can be used. The resin material may further include, as reinforcing fibers, fibers such as glass, carbon, graphite, aramid, polyethylene, and ceramic. Note that the inner cylinder 111 and the connecting member 113, in which the communication device 106 is not embedded, may be made of metal, but as described above, from the viewpoint of weight reduction, it is also preferable that the inner cylinder 111 and the connecting member 113 are made of resin.

In the present embodiment, the inner cylinder 111, the outer cylinder 112, and the connecting member 113 are integrally formed of a resin material by injection molding. As the injection molding method, it is possible to integrally mold the entirety of the inner cylinder 111, the outer cylinder 112, and the connecting member 113 simultaneously. As the resin material, for example, a single type of resin material, a mixture containing two or more types of resin materials, or a mixture containing one or more types of resin materials and one or more types of elastomers may be used. Furthermore, additives such as antioxidants, plasticizers, fillers, or pigments may be included. The resin material is preferably a thermoplastic resin. Note that the inner cylinder 111, the outer cylinder 112, and the connecting member 113 may be formed separately and assembled together.

Note that the wheel member 102 has a function of connecting the axle and the ring member 103, and the ring member 103 has a function of absorbing vibrations transmitted from the ground to the axle. Thus, since the wheel member 102 and the ring member 103 have different functions, they may be formed of different materials. For example, the ring member 103 may be formed of a material having a relatively small elastic modulus to ensure vibration absorption performance, and the wheel member 102 may be formed of a material having an elastic modulus greater than that of the ring member 103 to ensure robustness.

The ring member 103 of the present embodiment is constituted by the above-described inner cylinder 111, outer cylinder 112, and connecting member 113, but is not limited to this configuration. The ring member 103 may further include other parts in addition to the inner cylinder 111, the outer cylinder 112, and the connecting member 113.

The spiral reinforcement layer 104 is formed by spirally winding, on the outer circumferential surface of the outer cylinder 112 of the ring member 103, a filament body 120 in which one cord 121 or a plurality of parallel cords 121 are embedded in a covering body 122. In FIG. 11, as an example, a filament body 120 in which only one cord 121 is embedded in the covering body 122 is depicted.

By spirally winding the filament body 120 on the outer circumferential surface of the outer cylinder 112, which serves as the outer circumferential surface of the ring member 103, the filament body 120 is adjacent in the tire width direction A on the outer circumferential surface of the outer cylinder 112. The portions of the covering body 122 of the filament body 120 that are adjacent in the tire width direction A are integrally bonded in the tire width direction A, thereby forming the spiral reinforcement layer 104 on the outer circumferential surface of the outer cylinder 112. The two-dot chain line in FIG. 11 indicates, for convenience of explanation, the boundary between the portions of the covering body 122 before they are bonded. In other words, the spiral reinforcement layer 104 includes a base layer 104a formed by bonding together the portions of the covering body 122 that are adjacent in the tire width direction A, and one or more cords 121 extending spirally within the base layer 104a. The covering body 122 may be made of, for example, a resin material. The covering body 122 may also be formed of a rubber composition, for example. As the cord 21, for example, a steel cord or the like can be used.

The spiral reinforcement layer 104 may be bonded to the outer circumferential surface of the outer cylinder 112 of the ring member 103 over the entire tire circumferential direction B. The bonding between the spiral reinforcement layer 104 and the outer cylinder 112 may be performed, for example, by welding the filament body 120 forming the spiral reinforcement layer 104 to the outer circumferential surface of the outer cylinder 112. When the covering body 122 is formed of a rubber composition, the bonding between the spiral reinforcement layer 104 and the outer cylinder 112 may be performed by vulcanization bonding.

In the non-pneumatic tire 101 of the present embodiment, since the spiral reinforcement layer 104 is provided, the rigidity of the outer cylinder 112 of the ring member 103 can be increased. As a result, for example, even when the non-pneumatic tire 101 is used in environments where it receives a large input of force from the road surface or where a projection on the road surface pierces the tread member 105 of the non-pneumatic tire 101, the durability of the non-pneumatic tire 101 can be improved.

The tread member 105 surrounds the outer side in the tire radial direction C of the spiral reinforcement layer 104. More specifically, the tread member 105 is formed in a cylindrical shape and covers the entire outer circumferential surface on the outer side in the tire radial direction C of the outer cylinder 112 of the ring member 103 from the outer side in the tire radial direction C of the spiral reinforcement layer 104. The elastic modulus of the material constituting the tread member 105 is smaller than the elastic modulus of the material constituting the ring member 103. The outer circumferential surface on the outer side in the tire radial direction C of the tread member 105 is the tread surface 105a of the non-pneumatic tire 101. As illustrated in FIG. 11, the tread surface 105a of the tread member 105 may be a curved surface that is convex toward the outer side in the tire radial direction C at the central side in the tire width direction A compared to the both end sides.

The tread member 105 is formed, for example, of a vulcanized rubber in which a rubber composition containing natural rubber or the like is vulcanized, a thermoplastic material or the like. Examples of the thermoplastic material include thermoplastic elastomers and thermoplastic resins. Examples of the thermoplastic elastomers include amide-based thermoplastic elastomer (TPA), ester-based thermoplastic elastomer (TPC), olefin-based thermoplastic elastomer (TPO), styrene-based thermoplastic elastomer (TPS), urethane-based thermoplastic elastomer (TPU), thermoplastic rubber vulcanizate (TPV), and other thermoplastic elastomers (TPZ) as defined in JIS K 6418. Examples of the thermoplastic resins include urethane resin, olefin resin, vinyl chloride resin, polyamide resin, and the like. From the viewpoint of wear resistance, it is preferable to form the tread member 5 of vulcanized rubber.

As illustrated in FIGS. 9 to 11, the communication device 106 is embedded in the ring member 103. More specifically, the communication device 106 is embedded in the outer cylinder 112 of the ring member 103. By doing so, the periphery of the communication device 106 is protected by the outer cylinder 112, and it is possible to suppress damage to the communication device 106 during vehicle running.

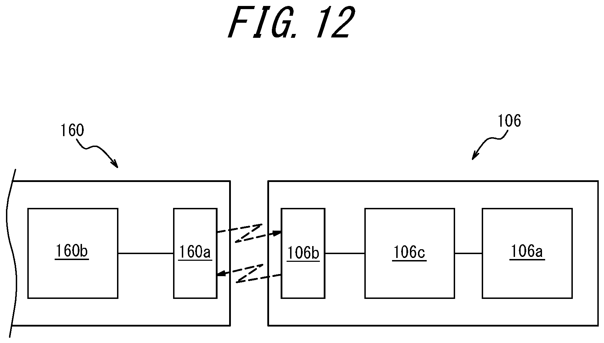

FIG. 12 is a diagram depicting an RF tag as the communication device 106 of the present embodiment, and a reader/writer 160 capable of wireless communication with this RF tag. As illustrated in FIG. 12, the communication device 106 of the present embodiment may be a passive RF tag including a storage unit 106a that stores information regarding the non-pneumatic tire 101, an antenna unit 106b capable of transmitting and receiving information with a reader/writer 160 located outside the non-pneumatic tire 101, and a controller 106c capable of writing information to and reading information from the storage unit 106a. Specifically, the RF tag as the communication device 106 of the present embodiment can receive, via the antenna unit 106b, information transmitted from the antenna unit 160a of the reader/writer 160 by means of radio waves or magnetic fields. By rectification (in the case of radio waves) or resonance (in the case of magnetic fields), power is generated in the antenna unit 106b, and the storage unit 106a and controller 106c perform predetermined operations. For example, the controller 106c reads out information from the storage unit 106a and replies (transmits) it to the reader/writer 160 via the antenna unit 106b by means of radio waves or magnetic fields. The antenna unit 160a of the reader/writer 160 receives radio waves or magnetic fields from the RF tag as the communication device 106 of the present embodiment. The controller 160b of the reader/writer 160 can obtain the information stored in the storage unit 106a by extracting the received information. The above-described storage unit 106a and controller 106c can be constituted, for example, by an integrated circuit (IC chip) including a non-volatile memory.

The information stored in the storage unit 106a of the RF tag as the communication device 106 of the present embodiment is not particularly limited. The storage unit 106a may, for example, store unique identification information of the non-pneumatic tire 101, such as the manufacturer, manufacturing plant, manufacturing date, and the like of the non-pneumatic tire 101, which can identify each non-pneumatic tire individually. The storage unit 106a may also store, as information rewritable by the reader/writer 160, tire history information such as the running distance of the non-pneumatic tire 101, the number of sudden braking events, the number of roaring starts, the number of sharp cornering situations, and the like. Furthermore, for example, a sensor for detecting tire acceleration or the like may be attached to the non-pneumatic tire 101, and the storage unit 106a may store detection information detected by the sensor. The RF tag as the communication device 106 can acquire detection information from the sensor by wirelessly communicating with the sensor via the antenna unit 106b.

Note that the communication device 106 only needs to be configured to be capable of wireless communication with a predetermined device outside the non-pneumatic tire 101, and is not limited to the RF tag of the present embodiment.

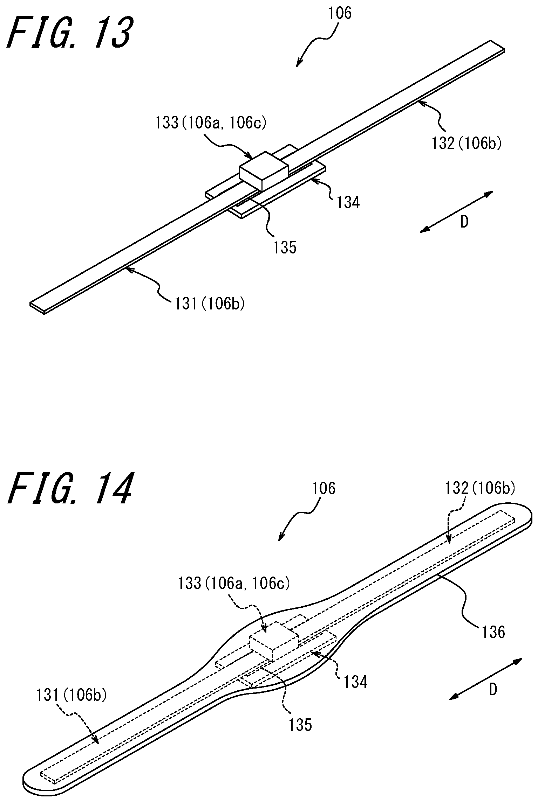

FIGS. 13 and 14 are perspective views depicting the RF tag as the communication device 106 of the present embodiment. As illustrated in FIG. 13, the RF tag as the communication device 106 of the present embodiment includes: a first antenna 131 and a second antenna 132 constituting the antenna unit 106b; an IC chip 133 constituting the controller 106c and storage unit 106a, which operates by the electromotive force induced by radio waves received by the first antenna 131 and the second antenna 132; a plate-shaped supporting member 134 to which the IC chip 133 is attached; and a conductive connecting member 135 that electrically connects the IC chip 133 to each of the first antenna 131 and the second antenna 132. As illustrated in FIG. 13, the RF tag as the communication device 106 of the present embodiment includes the first antenna 131 and the second antenna 132, both of which are elongated and protrude in opposite directions from the IC chip 133 with the IC chip 133 interposed therebetween. In this way, the communication device 106 of the present embodiment has an elongated shape in which the longitudinal direction D of the first antenna 131 and the second antenna 132 is the longitudinal direction of the entire communication device 106. FIG. 14 is a perspective view depicting a state in which the RF tag as the communication device 106 illustrated in FIG. 13 is covered by a covering member 136. The covering member 136 is formed of resin. In the present embodiment, as illustrated in FIG. 14, the RF tag as the communication device 106, whose periphery is covered by the covering member 136, is embedded in the outer cylinder 112.

Hereinafter, with reference to FIGS. 10 and 11, details regarding the position and orientation in which the communication device 106 of the present embodiment is embedded in the outer cylinder 112 will be described.

As described above, the RF tag as the communication device 106 of the present embodiment has an elongated shape. As illustrated in FIGS. 10 and 11, the communication device 106 of the present embodiment is embedded in the outer cylinder 112 such that its longitudinal direction (in the present embodiment, the same direction as the longitudinal direction D of the first antenna 131 and the second antenna 132, hereinafter referred to as the longitudinal direction D) extends along the tire width direction A. The outer cylinder 112 of the non-pneumatic tire 101 is deformed in the tire radial direction C by forces received from the road surface during vehicle running. At this time, the variation in the amount of deformation in the tire radial direction C depending on the position in the tire circumferential direction B is greater than the variation in the amount of deformation in the tire radial direction C depending on the position in the tire width direction A. Therefore, by embedding the elongated communication device 106 in the outer cylinder 112 such that its longitudinal direction D extends along the tire width direction A, it is possible to suppress the concentration of stress on a part of the longitudinal direction D of the communication device 106 within the outer cylinder 112, and the resulting local deformation, damage, or breakage. That is, compared to an arrangement in which the longitudinal direction D of the communication device 106 extends along the tire circumferential direction B, the durability of the communication device 106 can be improved.

Note that "extending along the tire width direction A" as used herein is not limited to being parallel to the tire width direction A, but also includes cases where the device is inclined at an angle of less than 45 degrees with respect to the tire width direction A. However, as in the present embodiment, it is preferable that the communication device 106 is arranged such that its longitudinal direction D is parallel to, or substantially parallel to, the tire width direction A, that is, inclined at an angle of 5 degrees or less with respect to the tire width direction A.

Further, as illustrated in FIGS. 10 and 11, the communication device 106 of the present embodiment is embedded in the outer cylinder 112 such that at least a part thereof is included in a connecting region X101 of the outer cylinder 112 of the ring member 103 where the connecting member 113 is connected. Here, the "connecting region X101" refers to, when the outer cylinder 112 and the connecting member 113 in the connected state are divided into two by the virtual inner circumferential surface 112a of the outer cylinder 112 as a boundary, the region of the outer cylinder 112 that is covered in the tire radial direction C by the virtual end surface 113a1 of the outer end portion 113a of the connecting member 113.

In the outer cylinder 112, the connecting region X101 has greater rigidity in the tire radial direction C and can suppress deformation in the tire radial direction C compared to regions other than the connecting region X101. Therefore, by arranging at least a part of the communication device 106 in the connecting region X101 of the outer cylinder 112, it is possible to suppress deformation and damage of the communication device 106 due to deformation of the outer cylinder 112 in the tire radial direction C, as compared to a configuration in which the entire communication device 106 is arranged in a region other than the connecting region X101.

Further, in the case where the non-pneumatic tire 101 is configured such that the connecting member 113 supports the load of the vehicle by being compressed and deformed in the tire radial direction C at a position between the wheel member 102 and the road surface (a so-called "Bottom Load" configuration), the region of the outer cylinder 112 other than the connecting region X101 is more likely to undergo buckling deformation due to forces from the road surface compared to the connecting region X101 of the outer cylinder 112. Therefore, in the case where the non-pneumatic tire 101 has a so-called "Bottom Load" configuration, it is particularly preferable that at least a part of the communication device 106 be arranged in the connecting region X101 of the outer cylinder 112. By doing so, it is possible to suppress deformation and damage of the communication device 106 due to buckling deformation of the outer cylinder 112.

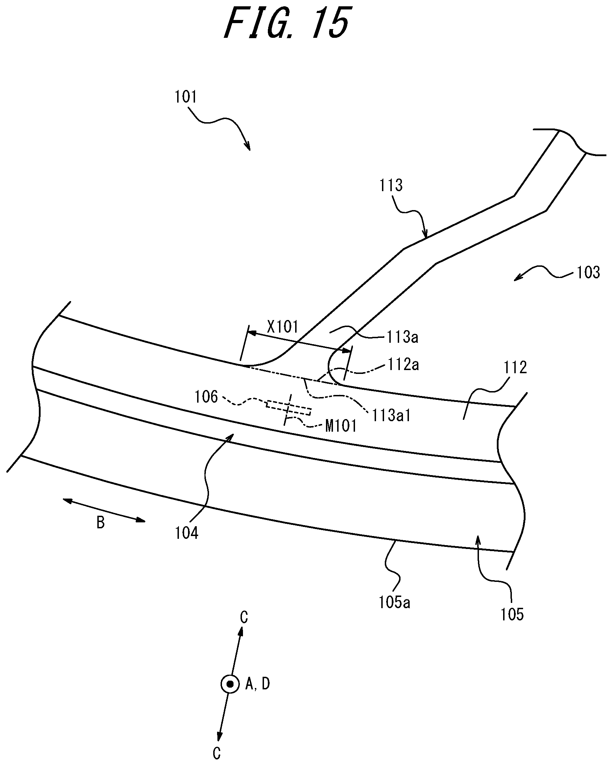

Note that, as illustrated in FIG. 10, from the viewpoint of suppressing deformation and damage of the communication device 106, it is preferable that the communication device 106 be embedded in the outer cylinder 112 such that at least the center position M101 of the communication device 106 in the tire circumferential direction B is included in the connecting region X101. Further, from the viewpoint of suppressing deformation and damage of the communication device 106, as illustrated in FIG. 15, it is more preferable that the entire communication device 106 be embedded in the outer cylinder 112 such that it is included in the connecting region X101. Such an arrangement is more easily realized, as illustrated in FIG. 15, when the connecting member 113 is a plate-shaped portion used as a leaf spring and the communication device 106 has an elongated shape with a longitudinal direction D, by arranging the longitudinal direction D of the communication device 106 to extend along the tire width direction A.

The non-pneumatic tire according to the present disclosure is not limited to the specific configurations illustrated in the above-described embodiments and modifications, and various modifications, changes, and combinations may be made without departing from the scope of the claims.

### [Contribution to the Sustainable Development Goals (SDGs) led by the United Nations]

SDGs have been advocated for the realization of a sustainable society. One embodiment of the present disclosure is considered to be a technology that can contribute to, for example, "No. 12: Responsible Consumption and Production" and "No. 13: Climate Action."

### INDUSTRIAL APPLICABILITY

The present disclosure relates to a non-pneumatic tire.

### REFERENCE SIGNS LIST

1: non-pneumatic tire
2: wheel member
2a: boss
2b: holding cylindrical portion
2c: supporting cylindrical portion
2d: spoke
3: ring member
4: spiral reinforcement layer
4a: base layer
5: tread member
5a: tread surface
6: communication device
6a: storage unit
6b: antenna unit
6c: controller
11: inner cylinder
11a: virtual outer circumferential surface of outer cylinder
12: outer cylinder
13: connecting member
13a: outer end portion of connecting member
13b: inner end portion of connecting member
13b1: virtual end surface of inner end portion of connecting member
20: filament body
21: cord
22: covering body
31: first antenna
32: second antenna
33: IC chip
34: supporting member
35: connecting member
36: covering member
60: reader/writer
60a: antenna unit
60b: controller
101: non-pneumatic tire
102: wheel member
102a: boss
102b: holding cylindrical portion
102c: supporting cylindrical portion
102d: spoke
103: ring member
104: spiral reinforcement layer
104a: base layer
105: tread member
105a: tread surface
106: communication device
106a: storage unit
106b: antenna unit
106c: controller
111: inner cylinder
112: outer cylinder
112a: virtual inner circumferential surface of outer cylinder
113: connecting member
113a: outer end portion of connecting member
113a1: virtual end surface of outer end portion of connecting member
113b: inner end portion of connecting member
120: filament body
121: cord
122: covering body
131: first antenna
132: second antenna
133: IC chip
134: supporting member
135: connecting member
136: covering member
160: reader/writer
160a: antenna unit
160b: controller
A: tire width direction
B: tire circumferential direction
C: tire radial direction
D: longitudinal direction of communication device
CL: tire equatorial plane
M1, M101: center position of communication device in tire circumferential direction
O: central axis of tire
X1: connecting region of inner cylinder where connecting member is connected
X101: connecting region of outer cylinder where connecting member is connected

## Claims

1. A non-pneumatic tire comprising: a wheel member attachable to an axle;
a ring member mounted on the wheel member; and
a communication device embedded in the ring member,
wherein the ring member comprises:
an inner cylinder fixed to the wheel member;
an outer cylinder surrounding the inner cylinder on a tire radial direction outer side; and
a connecting member that connects the inner cylinder and the outer cylinder and is elastically deformable between the inner cylinder and the outer cylinder,
wherein the communication device is embedded in the inner cylinder or the outer cylinder.

2. The non-pneumatic tire according to claim 1, wherein the communication device has an elongated shape, and the communication device is embedded in the inner cylinder such that its longitudinal direction extends along a tire width direction.

3. The non-pneumatic tire according to claim 1 or 2, wherein the communication device is embedded in the inner cylinder such that at least a part thereof is not included in a connecting region of the inner cylinder where the connecting member is connected.

4. The non-pneumatic tire according to claim 3, wherein the communication device is embedded in the inner cylinder such that the entirety thereof is not included in the connecting region.

5. The non-pneumatic tire according to claim 1, wherein the communication device has an elongated shape, and the communication device is embedded in the outer cylinder such that its longitudinal direction extends along a tire width direction.

6. The non-pneumatic tire according to claim 1 or 5, wherein the communication device is embedded in the outer cylinder, and
the non-pneumatic tire comprises:
a spiral reinforcement layer formed by spirally winding, on an outer circumferential surface of the outer cylinder of the ring member, a filament body in which one cord or a plurality of parallel cords are embedded in a covering body; and
a tread member surrounding the spiral reinforcement layer on a tire radial direction outer side.

7. The non-pneumatic tire according to any one of claims 1, 5, or 6, wherein the communication device is embedded in the outer cylinder such that at least a part thereof is included in a connecting region of the outer cylinder where the connecting member is connected.

8. The non-pneumatic tire according to claim 7, wherein the communication device is embedded in the outer cylinder such that the entirety thereof is included in the connecting region.

9. The non-pneumatic tire according to any one of claims 1 to 8, wherein the communication device is an RF tag.
